# DEMANDE DE BREVET EUROPEEN

(11) **EP 3 715 552 A1**
(43) Date de publication de la demande: **30.09.2020**
(21) Numéro de dépôt: 20165754.1
(22) Date de dépôt: 26.03.2020
(51) Int. Cl.: E04C 5/01, E04C 5/07

(54) **RENFORCEMENT D'UNE MATRICE CIMENTAIRE OU BÉTON**

(30) Priorité: 26.03.2019 FR 1903153
(71) Demandeur: Consolis SAS, 92400 Courbevoie (FR)
(72) Inventeur: MARY, Philippe, 75002 PARIS (FR)
(74) Mandataire: Regimbeau

(57) **Abrégé**

L'invention concerne un dispositif (10) de renforcement d'une matrice en un matériau tel que du béton ou du ciment, comprenant quatre brins (1, 2, 3, 4) s'étendant respectivement depuis un point central (O), chaque brin étant de longueur identique, et chaque extrémité de chaque brin constituant un sommet d'un tétraèdre régulier.

## Description

### DOMAINE TECHNIQUE GENERAL

L'invention concerne le domaine général des matériaux en ciment ou béton et concerne particulièrement le renforcement d'une matrice ou d'un matériau au moyen de dispositifs unitaires à géométrie tridimensionnelle.

L'invention est particulièrement destinée au renforcement des matrices cimentaires ou béton pour la fabrication par impression 3D et pour l'incorporation directe dans le béton dans le cadre de la préfabrication ou du coulage traditionnel sur site.

### ETAT DE LA TECHNIQUE

Les matrices cimentaires traditionnelles nécessitent des renforcements afin d'améliorer les résistances mécaniques du fait de la faible résistance en traction et flexion des matrices cimentaires non armées.

Le renforcement de matrice est traditionnellement réalisé de deux façons, soit en incorporant des armatures ou une ossature rigide (cages d'armatures), soit en incorporant des fibres au sein de la matrice.

Dans le cas de cages d'armatures, les barres d'acier utilisées sont façonnées et assemblées avant d'être déposés dans un coffrage (moules ou banches). Le béton est par la suite coulé venant enrober les armatures. Ce procédé requiert des investissements lourds en termes de coffrage et la phase d'assemblage des armatures consomme énormément de temps de main d'œuvre. En outre, ce procédé de béton armé et/ou précontraint exige des heures d'études techniques de dimensionnement complexes et de dessin.

En ce qui concerne l'utilisation de fibres (fibres métalliques ou organiques), ces dernières sont mélangées à la matrice cimentaire durant la phase de malaxage. La pâte ainsi fibrée est directement coulée dans un coffrage (moules ou banches). Les principaux inconvénients à l'utilisation des fibres sont la non homogénéité dans la répartition des fibres dans la matrice, l'absence de renforcement uniforme, le coût des fibres et les difficultés de malaxage et mise en œuvre.

### PRESENTATION DE L'INVENTION

Un but de l'invention est de proposer un renforcement tridimensionnel qui soit simple à mettre en œuvre dans une matrice cimentaire ou en béton.

A ce titre, l'invention concerne selon un premier aspect, un dispositif de renforcement d'une matrice en un matériau tel que du béton ou du ciment, comprenant quatre brins s'étendant respectivement depuis un point central, chaque brin étant de longueur identique, et chaque extrémité de chaque brin constituant un sommet d'un tétraèdre régulier.

L'invention, selon le premier aspect, est avantageusement complétée par les caractéristiques suivantes, prises seules ou en une quelconque de leur combinaison techniquement possible :
- les brins ont un diamètre identique.
- les brins sont lisses ou crantés.
- les brins sont dans un matériau choisi dans le groupe suivant : acier, plastique, fibres de carbone, basalte.

Selon un deuxième aspect, l'invention concerne une empreinte de forme tridimensionnelle comprenant une première partie d'empreinte et une deuxième partie d'empreinte, chaque partie d'empreinte comprenant quatre rainures, la première partie et la deuxième partie étant symétriques et complémentaires, les deux parties d'empreinte étant telles qu'assemblées les rainures se coupent au barycentre de l'empreinte, les rainures dessinant un dispositif de renforcement selon le premier aspect de l'invention.

L'invention, selon le deuxième aspect, est avantageusement complétée par les caractéristiques suivantes, prises seules ou en une quelconque de leur combinaison techniquement possible :
- les deux parties d'empreinte forment ensemble un cube, les deux parties d'empreintes étant telles qu'assemblées les rainures se coupent au barycentre du cube, chaque partie d'empreinte comprenant une seule face carrée.
- elle comprend un orifice traversant chacune des deux empreintes selon un axe passant par le barycentre de l'empreinte.
- les rainures sont lisses ou indentées.

Selon un troisième aspect, l'invention concerne un procédé de fabrication d'un dispositif de renforcement selon le premier aspect de l'invention au moyen d'une empreinte en deux parties selon le deuxième aspect de l'invention, le procédé comprenant les étapes suivantes :
- disposition de deux tiges sur la première partie de l'empreinte,
- assemblage de la deuxième partie de l'empreinte avec la première partie de l'empreinte ;
- serrage des deux pièces ainsi assemblées de manière à déformer les tiges afin d'obtenir ledit dispositif de renforcement.

L'invention, selon le troisième aspect, est avantageusement complétée par les caractéristiques suivantes, prises seules ou en une quelconque de leur combinaison techniquement possible :
- l'empreinte comprenant l'orifice traversant en son centre, le procédé comprenant une étape de fourniture de deux tiges indépendantes, et après le serrage une étape consistant à souder les tiges entre elles par l'intermédiaire de l'orifice.

Il comprend une étape de fourniture de deux tiges de longueurs identiques assemblées entre elles en leur centre de manière à ce qu'elles forment une croix.

Selon un quatrième aspect, l'invention concerne une structure comprenant une matrice en ciment ou béton et une armature constituée d'une pluralité de dispositif de renforcement selon le premier aspect de l'invention, ladite structure étant tridimensionnelle, l'armature étant noyée dans la matrice et est constituée de dispositifs de renforcement arrangés de manière aléatoire ou organisée.

L'invention, selon le quatrième aspect, est avantageusement complétée par les caractéristiques suivantes, prises seules ou en une quelconque de leur combinaison techniquement possible :
L'armature est constituée de dispositifs de renforcement arrangés de manière organisée afin de former une structure alvéolaire en nid d'abeille selon les trois dimensions de la structure, une alvéole selon une dimension étant constituée de branches issues de trois dispositifs de renforcement.
- les dispositifs de renforcement sont connectés entre eux : par soudage, par attache physique telle qu'un connecteur en acier ou plastique.

Selon un cinquième aspect, l'invention concerne un procédé de fabrication, de préférence par impression 3D, d'une structure selon le quatrième aspect de l'invention, comprenant les étapes suivantes :
a) formation d'une couche de ciment ou de béton ;
b) positionnement sur la couche formée d'une couche de renforcement comprenant une pluralité de dispositifs de renforcement selon le premier aspect de l'invention ;
c) assemblage des dispositifs entre eux ;
d) Formation d'une couche recouvrant les dispositifs assemblés ;
e) Répétition des étapes a) à d) jusqu'à superposer un nombre prédéfini de couches de ciment ou béton et de renforcement de manière à obtenir une armature constituée de plusieurs dispositifs de renforcement organises en nid d'abeille.

Les avantages de l'invention sont multiples.

Le renforcement tridimensionnel de la matrice est composé d'une armature constituée de plusieurs dispositifs de renforcement selon l'invention qui sont disposés soit en réseau organisé soit de manière aléatoire. L'armature est plongée au sein d'une matrice (matrice cimentaire (mortier, béton), dans un sol ou au sein d'un plastique).

L'invention permet donc de proposer un squelette structurant de la matrice en s'affranchissant des contraintes des méthodes traditionnelles.

Le renforcement vise les applications de la fabrication additive mais aussi du coulage direct (préfabrication et coulage in situ).

Le renforcement est tridimensionnel selon les trois dimensions (x, y, z) de l'espace, il permet ainsi d'allier les performances d'une cage d'armatures sans nécessité d'assemblage complexe.

En effet, les fibres ne permettent qu'un renforcement bidimensionnel en fonction de l'orientation de ces dernières dans la matrice. Les éléments en cages d'armatures requièrent des complexités d'assemblage afin de prendre en compte les efforts tridimensionnels. Le matériau constitué par la matrice renforcé de l'invention a pour caractéristiques une meilleure orthotropie voire isotropie et une plus grande homogénéité des propriétés mécaniques.

En outre, la forme tétraédrique régulière extérieure ou en « chausse-trappe » permet en outre au dispositif de renforcement de toujours se positionner à la verticale sans pouvoir se renverser et assure un positionnement optimal dans la matrice.

Ainsi, la facilité d'intégration du renfort dans la matrice annule les étapes d'assemblage et de design des cages d'armatures.

### PRESENTATIONS DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 représente une vue axonométrique d'un dispositif de renforcement selon l'invention ;
La figure 2 représente une vue de dessus d'un dispositif de renforcement selon l'invention ;
La figure 3 représente une vue de côté d'un dispositif de renforcement de l'invention ;
Les figures 4a et 4b illustrent une première partie d'empreinte selon l'invention ;
Les figures 5a et 5b illustrent une empreinte selon l'invention ;
Les figures 6 et 7 illustrent des étapes d'un procédé de fabrication d'un dispositif de renforcement selon l'invention ;
Les figures 8 à 13 illustrent différentes vues d'une armature comprenant plusieurs dispositifs de renforcement organisés pour former une structure alvéolaire en nid d'abeille ;
Les figures 14 et 15 illustrent des étapes d'un procédé de fabrication d'une structure renforcée selon l'invention.

Sur l'ensemble des figures les éléments portent des références identiques.

### DESCRIPTION DETAILLEE DE L'INVENTION

### Dispositif de renforcement

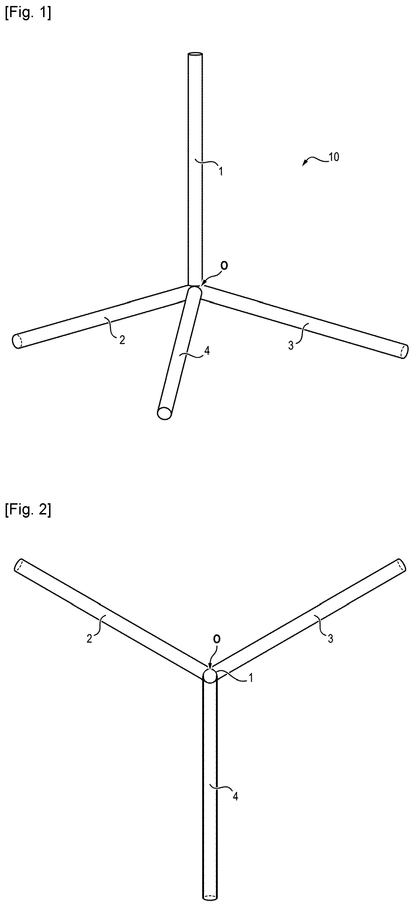

En référence aux **figures 1, 2** et **3****,** un dispositif de renforcement destiné à renforcer une structure comprenant une matrice cimentaire ou béton comprend quatre brins 1, 2, 3, 4 qui s'étendent depuis un point central O.

Tous les brins 1, 2, 3, 4 sont de longueur identique, diamètre identique et chaque extrémité constitue un sommet d'un tétraèdre régulier. Ainsi, chaque brin fait avec son voisin un angle de 120°.

Les longueurs et diamètres sont toutefois variables et dépendent de la structure dans laquelle ces dispositifs de renforcement sont destinés à être utilisés.

Les brins 1, 2, 3, 4 présente, de préférence, une longueur variable entre 0,5cm et 10cm et un diamètre de brin de 0,5mm à 10mm pour un rapport longueur/diamètre autour de 10.

Le dispositif de renforcement peut être constitué de différents matériaux tels que l'acier, le plastique, les fibres de carbone, de verre ou de basalte et ce en fonction des contraintes extérieures de durabilité.

Afin de favoriser l'ancrage des dispositifs de renforcement, les brins 1, 2, 3, 4 peuvent être crantés. Pour une adhérence maximale les brins sont crantés tandis que pour une adhérence minimale les brins sont lisses.

De même l'about ou extrémité de chaque brin peut être façonné pour permettre l'assemblage entre eux de plusieurs dispositifs de renforcement.

En particulier, les abouts ou extrémité des brins sont de plusieurs types en fonction de l'ancrage souhaité :
- une terminaison franche dans le cas d'un ancrage faible
- une terminaison en queue d'aronde pour augmenter l'ancrage
- une terminaison par boucle permettant d'augmenter l'ancrage et de liaisonner les inventions entre elles.

### Fabrication d'un dispositif de renforcement

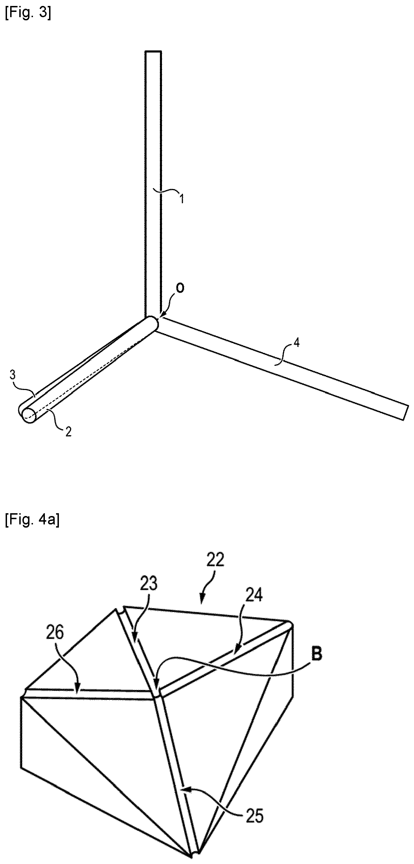

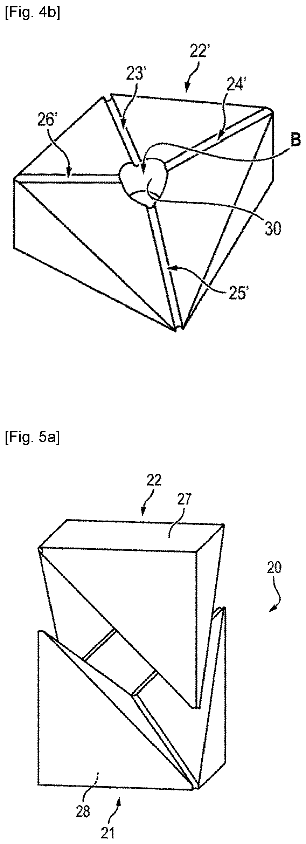

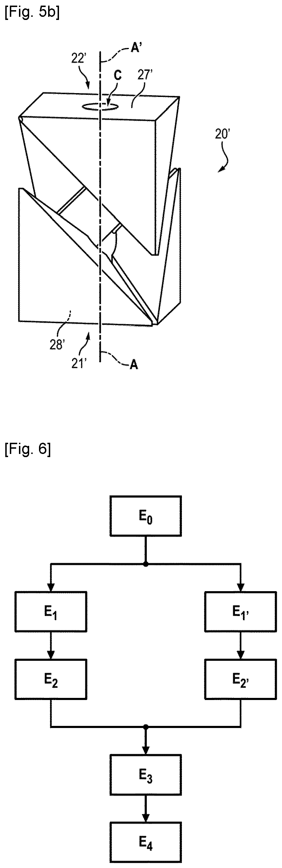

Comme cela est illustré sur les **figures 4a****,** **4b****,** **5a****,** **5b** le dispositif de renforcement ci-dessus décrit est avantageusement fabriqué au moyen d'une empreinte en deux parties : une première partie d'empreinte 21, 21' et une deuxième partie d'empreinte 22, 22'. Les deux parties d'empreinte sont symétriques et complémentaires et forment ensemble une forme tridimensionnelle ayant un barycentre B.

De manière avantageuse, les deux parties d'empreinte forment ensemble un cube et sont donc symétriques et surtout complémentaires. De plus, une seule face 27, 27', 28, 28' de chaque empreinte est carrée.

En outre, chaque partie d'empreinte comprend quatre rainures 22, 23, 24, 25, 26, 22', 23', 24', 25', 26' et les deux parties d'empreinte lorsqu'elles sont assemblées ont leurs rainures qui se coupent au barycentre B et dessinent à l'intérieur de l'empreinte le dispositif de renforcement à quatre branches ci-dessus.

En particulier, les deux parties d'empreinte lorsqu'elles sont assemblées entre elles enserrent des tiges afin qu'elles forment les brins du dispositif de renforcement.

Les rainures 22, 23, 24, 25, 26, 22', 23', 24', 25', 26' peuvent présenter un fond lisse ou indenté en fonction de ce qui est souhaité pour la rugosité des brins du dispositif de renforcement.

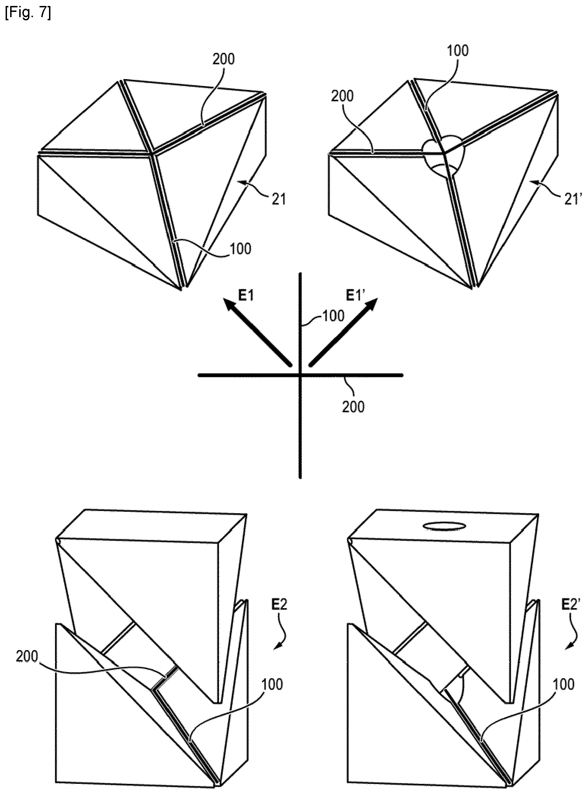

La fabrication d'un dispositif de renforcement est mise en œuvre au moyen de l'empreinte selon les étapes suivantes (voir **figures 6** et **7**).

Deux tiges 100, 200 sont disposées (étape E1, étape E1') sur la première 21, 21' partie d'empreinte. Bien entendu la première et la deuxième partie d'empreintes sont interchangeables. En particulier, les tiges sont disposées dans les rainures 23, 24, 25, 26, 23', 24', 25', 26' de la première partie d'empreinte 21, 21'.

Ensuite, la première partie d'empreinte 21, 21'et la deuxième partie d'empreinte 22, 22' sont assemblées ensemble (étape E2, étape E2') puis serrées entre elles (étape E3) de manière à déformer les tiges pour qu'elles forment le dispositif de renforcement.

Les rainures de la deuxième partie d'empreinte viennent donc enserrer les tiges afin qu'elles ne bougent pas pendant l'opération de serrage. En outre, elles donnent selon leur rugosité la rugosité voulue à chaque tige. Pour donner la rugosité souhaitée aux brins, le formage à froid peut donc être utilisé ou alors les tiges peuvent être crantées au préalable.

Le serrage (étape E3) des deux parties d'empreinte peut s'effectuer au moyen d'un étau ou de tout autre moyen convenant au serrage de deux pièces entre elles.

De manière préférée, les tiges 100, 200 disposées sur la première partie d'empreinte sont préalablement assemblées (étape E0) ensemble et forment donc une croix. L'assemblage peut s'effectuer au moyen d'un point de soudure (non représenté) au centre de chaque tige.

De manière alternative, les tiges 100, 200 sont indépendantes et sont disposées chacune dans les rainures de la première partie d'empreinte. Selon cette alternative, les tiges 100, 200 sont soudées (étape E4) après le serrage par les deux parties d'empreinte. Afin de permettre le soudage après que les tiges ont pris leur forme, l'empreinte comprend un orifice 30 traversant chacune des deux parties d'empreintes 22, 22' selon un axe AA' passant par le barycentre (B). C'est par cet orifice 30 que le point de soudure est effectué. De cette façon il n'y a pas de manipulations des tiges qui pourraient nuire à la forme donnée, les tiges étant immobiles entre les deux parties d'empreinte.

### Structure renforcée

Le dispositif de renforcement ci-dessus décrit est avantageusement utilisé pour renforcer une matrice en ciment ou en béton.

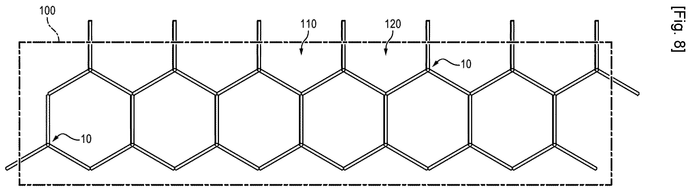

Ainsi, comme illustré sur la **figure 8****,** une structure renforcée tridimensionnelle 100 vue de dessus comprend une armature 120 constituée de plusieurs dispositif de renforcement 10, l'armature 120 étant noyée dans la matrice 110 et est constituée de dispositifs de renforcement arrangés de manière aléatoire ou organisée.

De préférence pour que la structure 100 soit renforcée dans toutes ses dimensions, l'armature 120 est telle que les dispositifs de renforcement sont organisés selon les trois dimensions de la structure 100 pour former une structure alvéolaire en nid d'abeille selon les trois dimensions de la structure.

Une alvéole selon une dimension est constituée de branches issues de trois dispositifs de renforcement adjacents.

L'armature 120 est telle qu'elle comprend plusieurs couches de dispositifs de renforcement ce qui permet d'avoir la structure alvéolaire selon les trois dimensions de la structure 100 renforcée.

Pour obtenir cette structure alvéolaire, les dispositifs de renforcement 10 sont connectés entre eux : par soudage, par attache physique telle qu'un connecteur en acier ou plastique.

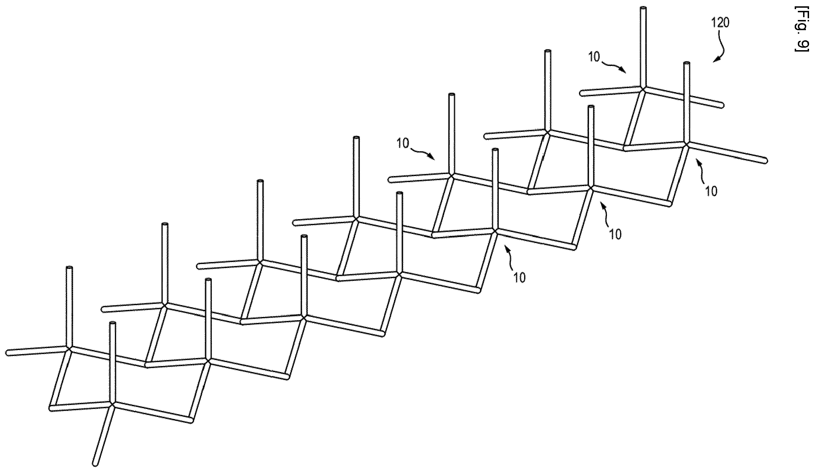

La **figure 9** illustre une vue en perspective d'une couche de dispositif de renforcement formant l'armature 120

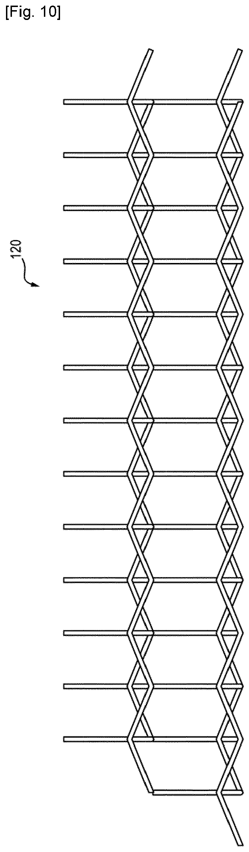

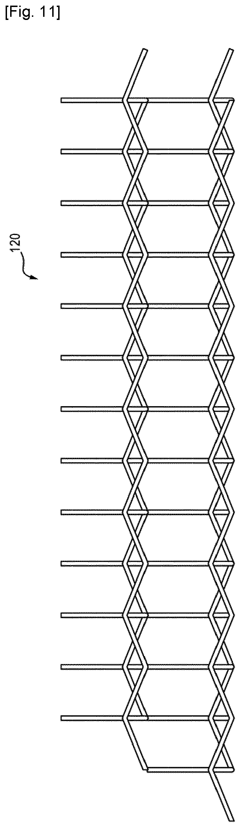

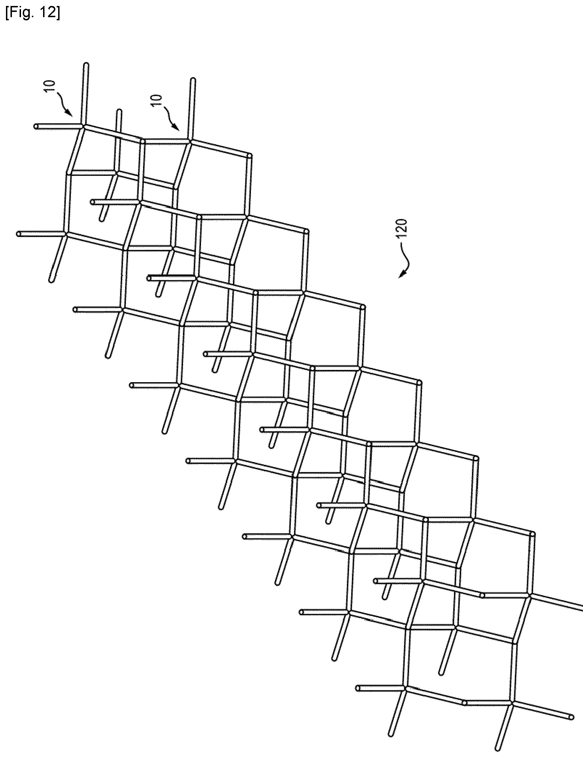

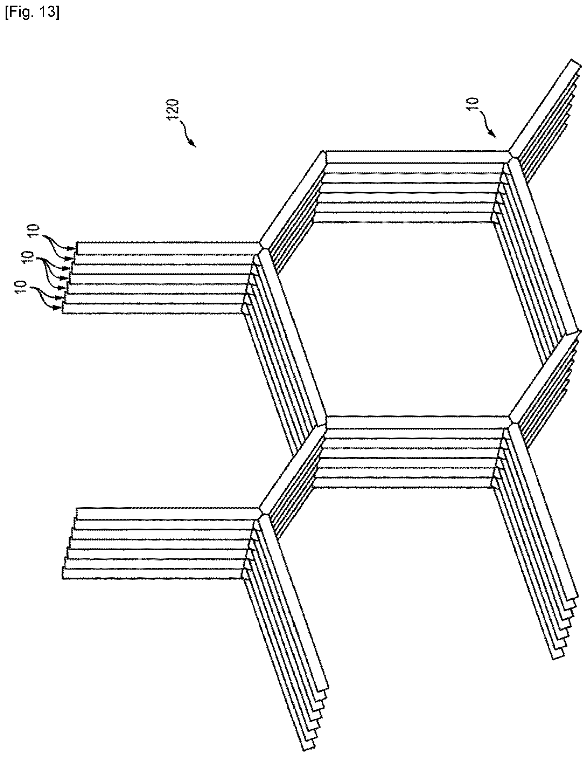

Les **figures 10****,** **11****,** **12** et **13** illustrent respectivement une armature en particulier :
- une vue de dessus de deux couches de dispositifs de renforcement 10 ;
- une vue de face de deux couches de dispositifs de renforcement 10 ;
- une vue en perspective de de deux couches de dispositifs de renforcement 10 ;
- une vue de côté de deux couches de dispositifs de renforcement 10.

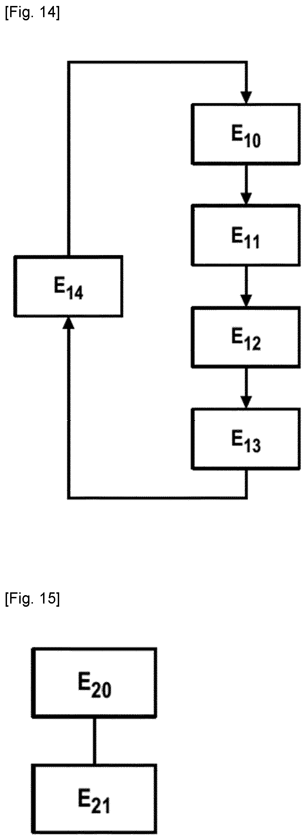

Avantageusement et en relation avec la **figure 14****,** une telle structure est compatible avec le procédé d'impression 3D couche par couche de ciment ou de béton :
a) formation (étape E10) d'une couche de ciment ou de béton ;
b) positionnement (étape E11) sur la couche formée d'une couche de renforcement comprenant une pluralité de dispositifs de renforcement tels que décrit ci-avant ;
c) assemblage (étape E12) des dispositifs entre eux ;
d) Formation (étape E13) d'une couche recouvrant les dispositifs assemblés ;
e) répétition (E14) des étapes a) à d) jusqu'à superposer un nombre prédéfini de couches de ciment ou béton et de renforcement de manière à obtenir une armature 120 constituée de plusieurs dispositifs de renforcement organises en nid d'abeille

Bien entendu, en relation avec la **figure 15****,** il peut être possible de fabriquer (étape E20) en amont l'armature 120 en nid d'abeille puis de couler (étape E21) la matrice de béton ou de ciment pour noyer l'armature et ainsi obtenir la structure 100 renforcée.

## Revendications

1. Dispositif (10) de renforcement d'une matrice en un matériau tel que du béton ou du ciment, comprenant uniquement quatre brins (1, 2, 3, 4) s'étendant respectivement depuis un point central (O), chaque brin étant de longueur identique, et chaque extrémité de chaque brin constituant un sommet d'un tétraèdre régulier.

2. Dispositif de renforcement selon la revendication précédente, dans lequel les brins (1, 2, 3, 4) ont un diamètre identique.

3. Dispositif de renforcement selon l'une des revendications précédentes, dans lequel les brins (1, 2, 3, 4) sont lisses ou crantés.

4. Dispositif de renforcement selon l'une des revendications précédentes, dans lequel les brins (1, 2, 3, 4) sont dans un matériau choisi dans le groupe suivant : acier, plastique, fibres de carbone, basalte.

5. Empreinte (20, 20') de forme tridimensionnelle comprenant une première partie d'empreinte (21, 21') et une deuxième partie d'empreinte (22, 22'), chaque partie d'empreinte (21, 21', 22, 22') comprenant quatre rainures (22, 23, 24, 25, 26, 22', 23', 24', 25', 26'), la première partie et la deuxième partie étant symétriques et complémentaires, les deux parties d'empreinte étant telles qu'assemblées les rainures se coupent au barycentre (B) de l'empreinte, les rainures dessinant un dispositif de renforcement selon l'une des revendications précédentes.

6. Empreinte selon la revendication 5, dans laquelle les deux parties d'empreinte forment ensemble un cube, les deux parties d'empreintes étant telles qu'assemblées les rainures se coupent au barycentre (B) du cube, chaque partie d'empreinte comprenant une seule face carrée (27, 28, 27', 28').

7. Empreinte (20') selon la revendication précédente, comprenant un orifice (30) traversant chacune des deux empreintes (22, 22') selon un axe (AA') passant par le barycentre (B) de l'empreinte.

8. Empreinte selon l'une des revendications 5 à 6, dans laquelle les rainures sont lisses ou indentées.

9. Procédé de fabrication d'un dispositif de renforcement selon l'une des revendications précédentes au moyen d'une empreinte en deux parties selon l'une des revendications 5 à 6, le procédé comprenant les étapes suivantes :
- disposition (E1, E1') de deux tiges (100, 200) sur la première partie de l'empreinte,
- assemblage (E2, E2') de la deuxième partie de l'empreinte avec la première partie de l'empreinte ;
- serrage (E3) des deux pièces ainsi assemblées de manière à déformer les tiges afin d'obtenir ledit dispositif de renforcement.

10. Procédé de fabrication selon la revendication précédente, l'empreinte comprenant l'orifice traversant en son centre, le procédé comprenant une étape de fourniture (E0') de deux tiges (100, 200) indépendantes, et après le serrage (E4) une étape consistant à souder les tiges entre elles par l'intermédiaire de l'orifice.

11. Procédé de fabrication selon la revendication 9, comprenant une étape de fourniture (E0) de deux tiges de longueurs identiques assemblées entre elles en leur centre de manière à ce qu'elles forment une croix.

12. Structure comprenant une matrice en ciment ou béton et une armature constituée d'une pluralité de dispositif de renforcement selon l'une des revendications 1 à 4, ladite structure étant tridimensionnelle, l'armature étant noyée dans la matrice et est constituée de dispositifs de renforcement arrangés de manière aléatoire ou organisée.

13. Structure selon la revendication 12, dans laquelle l'armature est constituée de dispositifs de renforcement arrangés de manière organisée afin de former une structure alvéolaire en nid d'abeille selon les trois dimensions de la structure, une alvéole selon une dimension étant constituée de branches issues de trois dispositifs de renforcement.

14. Structure selon l'une des revendications 12 à 13, dans laquelle les dispositifs de renforcement sont connectés entre eux : par soudage, par attache physique telle qu'un connecteur en acier ou plastique.

15. Procédé de fabrication, de préférence par impression 3D, d'une structure selon l'une des revendications 12 à 13, comprenant les étapes suivantes :
a) formation d'une couche de ciment ou de béton ;
b) positionnement sur la couche formée d'une couche de renforcement comprenant une pluralité de dispositifs de renforcement selon l'une des revendications 1 à 4 ;
c) assemblage des dispositifs entre eux ;
d) Formation d'une couche recouvrant les dispositifs assemblés ;
e) Répétition des étapes a) à d) jusqu'à superposer un nombre prédéfini de couches de ciment ou béton et de renforcement de manière à obtenir une armature constituée de plusieurs dispositifs de renforcement organises en nid d'abeille.
